# EUROPÄISCHE PATENTSCHRIFT

(11) **EP 3 026 404 B1**
(45) Veröffentlichungstag und Bekanntmachung des Hinweises auf die Patenterteilung: **19.02.2020**
(21) Anmeldenummer: 15003396.7
(22) Anmeldetag: 27.11.2015
(51) Int. Cl.: G01F 23/292, A47J 31/44, B67D 1/12

(54) **VORRICHTUNG ZUR BESTIMMUNG DES FÜLLVOLUMENS EINES MIT EINER FLÜSSIGKEIT UND/ODER EINEM GRANULAT BEFÜLLBAREN BEHÄLTERS, BEFÜLLEINRICHTUNG ZUM BEFÜLLEN DES BEHÄLTERS SOWIE VERWENDUNG DES BESTIMMTEN FÜLLVOLUMENS ZUR BESTIMMUNG EINER MENGE EINES DER FLÜSSIGKEIT UND/ODER DEM GRANULAT BEIZUMENGENDEN INHALTSSTOFFS**
DEVICE FOR DETERMINING A FILL LEVEL OF A CONTAINER WHICH CAN BE FILLED WITH A LIQUID AND/OR A GRANULATE, FILLING ASSEMBLY FOR FILLING THE CONTAINER AND USE OF THE DETERMINED FILL LEVEL TO DETERMINE THE AMOUNT OF AN ADDITIVE TO BE ADDED TO THE LIQUID AND/OR GRANULATE
DISPOSITIF DE DÉTERMINATION D'UN NIVEAU DE REMPLISSAGE D'UN RÉCIPIENT POUVANT ÊTRE REMPLI D'UN LIQUIDE OU D'UN ENSEMBLE DE REMPLISSAGE GRANULÉ, DISPOSITIF DE REMPLISSAGE DU RECIPIENT ET UTILISATION DU NIVEAU DE REMPLISSAGE POUR DÉTERMINER LA QUANTITÉ D'UN ADDITIF À AJOUTER AU LIQUIDE OU AU ENSEMBLE DE REMPLISSAGE GRANULÉ

(30) Priorität: 27.11.2014 DE 102014017490
(43) Veröffentlichungstag der Anmeldung: 01.06.2016
(73) Patentinhaber: JENOPTIK Optical Systems GmbH, 07745 Jena (DE)
(72) Erfinder: Kloth, Bernd, 16547 Birkenwerder (DE); Meißner, Reinhard, 99510 Apolda (DE); Flügel, Matthias, 10247 Berlin (DE); Buchwald, Jan, 07743 Jena (DE)
(74) Vertreter: Waldauf, Alexander

(56) Entgegenhaltungen:
- EP-A1- 1 176 416
- EP-A1- 1 562 027
- WO-A1-00/42384
- WO-A1-99/50172
- WO-A1-2006/063645
- WO-A1-2009/123359
- DE-A1- 3 325 220
- US-A- 4 446 896
- US-A- 5 831 268
- US-A1- 2005 178 197

## Beschreibung

### Stand der Technik

Die vorliegende Erfindung bezieht sich auf eine Vorrichtung zur Bestimmung des Füllvolumens eines mit einer Flüssigkeit und/oder einem Granulat befüllbaren Behälters, auf eine Befülleinrichtung zum Befüllen eines Behälters mit einer Flüssigkeit und/oder einem Granulat sowie zum Verwenden eines von einer Strahlquelle (Sender) einer Reflexionslichtschranke ausgesendeten Strahls, um das bestimmte Füllvolumen zur Bestimmung einer Menge eines der Flüssigkeit und/oder Granulat (106) beizumengenden Inhaltsstoffs. Der Behälter kann ein rotationssymmetrischer Grundkörper sein, auch andere Grundgeometrien (Quader, Trapeze, etc.) und Formen sowie Größen sind denkbar. Unter Strahlung wird im Sinne dieser Erfindung insbesondere eine Strahlung vom nahen UV- bis nahen IR-Spektralbereich verstanden. Unter Strahlquelle wird demzufolge eine solche Einrichtung verstanden, die in der Lage ist, eine derartige Strahlung auszusenden bzw. weiterzugeben.

Üblicherweise besitzen Getränkeautomaten, wie z. B. Kaffeevollautomaten, einen Wählhebel für die Tassengröße oder mehrere Tasten zur Wahl der gewünschten Kaffeemenge sowie eine manuelle Möglichkeit, die Befüllung der Tasse zu unterbrechen, um ein Überlaufen zu verhindern.

Die DE 10 2011 075 194 A1 offenbart einen Getränkeautomaten und ein Getränkeabfüllverfahren. Der Getränkeautomat umfasst eine Schätzeinrichtung zum Abschätzen eines Füllvolumens eines zum Befüllen mit dem Getränk am Getränkeautomaten bereitgestellten Gefäßes unter Verwendung einer Kamera oder eines kapazitiven Sensors.

Die WO 99/50172 A1 offenbart eine Vorrichtung zum Erfassen eines Inhalts eines mit einer Flüssigkeit befüllbaren Behälters und zur Erfassung der Größe des befüllbaren Behälters. Hierbei wird der Behälter/Container (3 unterschiedliche Größen) detektiert, um den Füllstand zu messen und ein Überlaufen zu verhindern.

### Offenbarung der Erfindung

Vor diesem Hintergrund wird mit der vorliegenden Erfindung eine verbesserte, genauere und einfachere Vorrichtung zur Bestimmung des Füllvolumens eines mit einer Flüssigkeit und/oder einem Granulat befüllbaren Behälters, eine verbesserte Befülleinrichtung zum Befüllen eines Behälters mit einer Flüssigkeit und/oder einem Granulat sowie eine Verwendung eines von einer Strahlquelle einer Reflexionslichtschranke ausgesendeten Strahls, um einen Füllstand einer Flüssigkeit und/oder eines Granulats in einem Behälter und/oder die Größe des Behälters zu bestimmen, gemäß den Hauptansprüchen vorgestellt. Die Vorrichtung ist im unabhängigen Patentanspruch 1 spezifiziert, während die Verwendung der Vorrichtung im unabhängigen Patentanspruch 7 spezifiziert ist. Vorteilhafte Ausgestaltungen ergeben sich aus den jeweiligen Unteransprüchen und der nachfolgenden Beschreibung.

Der Einsatz einer Reflexionslichtschranke, die gegenüber einem mit einem Material, hier insbesondere mit einer Flüssigkeit und/oder mit einem Granulat, zu befüllenden Behälter geeignet positioniert ist, ermöglicht eine Erweiterung einer das Material ausgebenden Ausgabeeinrichtung um ein System, das ein Füllvolumen des Behälters kostengünstig und mit wenig Aufwand bestimmen bzw. sensoriell abschätzen kann, um damit die Menge eines der Flüssigkeit und/oder Granulat beizumengenden Inhaltsstoffs zu bestimmen. Bei der Ausgabeeinrichtung kann es sich beispielsweise um eine Flüssigkeits- bzw. Granulatausgabeeinrichtung, insbesondere einen Getränkeautomaten wie zum Beispiel eine Kaffeemaschine oder auch um einen in einem technischen Labor eingesetzten Dosierautomaten handeln.

Unter Verwendung eines Ergebnisses einer solchen Bestimmung kann erfindungsgemäß Einfluss auf die Menge eines der Flüssigkeit und/oder dem Granulat beizumengenden Inhaltsstoffs genommen werden. Handelt es sich bei der Flüssigkeitsausgabeeinrichtung um einen Kaffeeautomaten, kann so beispielsweise eine geeignete Menge gemahlenen Kaffees bestimmt werden.

Vorteilhafterweise kann mit der Umsetzung des hier vorgeschlagenen Konzepts erreicht werden, dass eine Flüssigkeit oder ein Granulat bzw. eine Flüssigkeits- oder Granulatzusammensetzung für einen Behälter unabhängig von seiner Größe automatisch richtig dosiert wird, auch wenn sich beispielsweise bereits Flüssigkeit oder Granulat in dem Behälter befindet, da das System eine Vorbefüllung des Behälters bestimmen kann. Ein Überlaufen des Behälters lässt sich somit ohne Weiteres verhindern.

Mit dem hier vorgestellten Konzept können unterschiedliche Behältnisse in beispielsweise Getränkeautomaten Verwendung finden, die der Benutzer selbst mitbringt. Eine individuelle Befüllung anhand der leeren Kapazitäten des Behältnisses wäre somit möglich, und ein Überlaufen - beispielsweise bei einer Verwendung eines zu kleinen Behälters für eine gewählte Flüssigkeits- oder Granulatmenge - könnte verhindert werden. Ein kostenintensiver Einsatz spezieller Behältnisse, die mit einer Codierung oder Erkennungseinheit ausgestattet sein müssen, kann so entfallen.

In einer Weiterbildung des hierin vorgeschlagenen Ansatzes ist eine kundenspezifische Abrechnung mit einem Kundenkartenerfassungssystem realisierbar.

Eine Vorrichtung zur Bestimmung des Füllvolumens eines mit einer Flüssigkeit und/oder einem Granulat befüllbaren Behälters weist das folgende Merkmal auf:
Eine Reflexionslichtschranke mit einer Strahlquelle und einem Sensor, wobei die Reflexionslichtschranke ausgebildet ist, um unter Verwendung eines von der Strahlquelle in eine gegenüber der Reflexionslichtschranke positionierbare Öffnung eines Behälters ausgesendeten Strahls einen Füllstand einer Flüssigkeit und/oder eines Granulats in dem Behälter und die Funktion der Ermittlung der Geometrie des Behälters innehat.

Die Reflexionslichtschranke kann auch mit mehreren Strahlquellen (also mit mindestens einer Strahlquelle) und mit mehreren Sensoren (also mit mindestens einem Sensor) ausgebildet sein. Wesentlich für die Erfindung ist, dass die Reflexionslichtschranke als mindestens ein Reflexionslichtschrankenarray und/oder als mindestens eine Reflexionslichtschranke so ausgebildet ist, dass sie in x-, y- und/oder z-Richtung um einen Ursprung gedreht werden kann, um unter Verwendung eines von der Strahlquelle in eine gegenüber der Reflexionslichtschranke positionierbare Öffnung eines Behälters ausgesendeten Strahls einen Füllstand einer Flüssigkeit und/oder eines Granulats in dem Behälter zu bestimmen.

Die Vorrichtung kann Teil einer Befülleinrichtung zum Befüllen des Behälters mit der Flüssigkeit oder dem Granulat sein. Bei dem Behälter kann es sich um ein Gefäß, also einen Gegenstand mit einem Hohlraum und einer Öffnung zum Aufnehmen der Flüssigkeit bzw. des Granulats in den Hohlraum, handeln. Beispielsweise ist der Behälter eine Tasse oder ein Glas, wenn die Befülleinrichtung z. B. als ein Getränkeautomat ausgeführt ist. Der Inhalt kann eine Beschaffenheit des Hohlraums beschreiben bzw. Anhaltspunkte darüber liefern, welches Volumen des Hohlraums für die Befüllung mit der Flüssigkeit oder dem Granulat zur Verfügung steht. Die Reflexionslichtschranke kann dadurch gekennzeichnet sein, dass die Strahlquelle und der Sensor benachbart zueinander an der Vorrichtung angeordnet sind. Die Reflexionslichtschranke kann lediglich eine einzige Strahlquelle und einen einzigen Sensor umfassen oder eine Mehrzahl von Strahlquellen (auch als Lichtstrahlenquellen bezeichenbar) und eine entsprechende Mehrzahl von Sensoren (auch als Lichtsensor bezeichenbar) aufweisen. Der Füllstand kann eine Füllhöhe der Flüssigkeit und/oder des Granulats in dem Behälter beschreiben. Der Füllstand kann gleich null oder größer null sein.

Gemäß einer erfindungsgemäßen Ausführungsform der Vorrichtung kann die Strahlquelle zumindest eine LED aufweisen und der Sensor zumindest eine Fotodiode aufweisen. Die Fotodiode ist so ausgebildet, um den Strahl zu bestimmen und ein auf dem Strahl basierendes, den Füllstand repräsentierendes, elektrisches Füllstandsignal zu erzeugen. So kann der hier vorgeschlagene Ansatz besonders kostengünstig und unter Verwendung einer Vielzahl möglicher Strahlquellentypen und möglicher Sensortypen umgesetzt werden.

In besonderen Ausführungen der Erfindung kann die Strahlenquelle eine LED 130 und der Sensor mehrere Fotodioden oder die Strahlenquelle mehrere LEDs und der Sensor eine Fotodiode aufweisen. Kombinationen dieser Ausführungsformen sind durch die Erfindung erfasst und im Einzelnen nicht gesondert dargestellt.

Beispielsweise kann die LED in einer erfindungsgemäßen Ausführung einen Indiumgalliumarsenid-Halbleiter aufweisen. Die LED kann zusätzlich oder alternativ für einen Wellenlängenbereich ausgelegt sein, der hohe Absorptionswerte für den Strahl durch die Flüssigkeit oder das Granulat erlaubt. Damit kann gewährleistet werden, dass der Strahl zumindest überwiegend absorbiert wird, wenn es sich bei der Flüssigkeit zum Beispiel um Wasser oder Milch handelt, und der Füllstand kann möglichst sicher detektiert werden. Eine beispielhafte besonders geeignete Arbeitswellenlänge der LED kann 1450 Nanometer betragen. Die Erfindung ist jedoch darauf nicht begrenzt. In einer besonderen Ausführung kann die Arbeitswellenlänge der LED zum Beispiel 850 nm betragen.

Gemäß einer erfindungsgemäßen Ausführungsform kann die Strahlquelle ausgebildet sein, um den Strahl als einen defokussierten Strahl auszusenden. So kann die Erfassung des Füllstands robuster gegenüber Störeinflüssen gestaltet werden.

Alternativ kann die Strahlquelle ausgebildet sein, um den Strahl als einen fokussierten Strahl auszusenden. Mit dieser erfindungsgemäßen Ausführungsform ist eine besonders exakte Messung der Füllstandshöhe realisierbar.

Erfindungsgemäß ist die Vorrichtung als eine Füllvolumen-Bestimmungseinrichtung ausgeführt. Die Füllvolumen-Bestimmungseinrichtung ist so ausgebildet, um unter Verwendung des Füllstands und der Geometrie des Behälters ein aktuell verfügbares Füllvolumen des Behälters zu bestimmen. Mit dieser Ausführungsform kann die Flüssigkeit bzw. das Granulat zur Befüllung des Behälters vorteilhafterweise optimal dosiert bzw. ein Überlaufen des Behälters verhindert werden.

Gemäß einer nicht erfindungsgemäßen Ausführungsform kann die Reflexionslichtschranke eine Mehrzahl von in einer Reihe angeordneten LEDs als die Strahlquelle aufweisen und/oder eine Mehrzahl von in einer weiteren Reihe angeordneten Fotodioden als den Sensor aufweisen. Dabei kann die Reflexionslichtschranke ausgebildet sein, um unter Verwendung einer der Mehrzahl von LEDs entsprechenden Mehrzahl von Strahlen eine Geometrie des Behälters zu bestimmen, wenn der Behälter gegenüber der Reihe von LEDs und/oder der weiteren Reihe von Fotodioden aufgestellt ist. Diese Ausführungsform weist den Vorteil auf, dass die Geometrie des Behälters - also seine Form, Größe, Wanddicke, etc. - schnell und kostengünstig bemessen werden kann.

Günstig ist es auch, wenn die Vorrichtung einen Antrieb zum Bewegen der Reflexionslichtschranke umfasst. Entsprechend kann die Reflexionslichtschranke ausgebildet sein, um unter Verwendung eines von der Strahlquelle ausgesendeten Strahls eine Geometrie des Behälters zu bestimmen, wenn die Reflexionslichtschranke von dem Antrieb in Bezug zu einer Position des Behälters bewegt wird. Mit dieser nicht erfindungsgemäßen Ausführungsform kann die Geometrie des Behälters lediglich nur mit einer LED und nur einer Fotodiode oder einer kleinen Anzahl von LEDs und einer entsprechenden Anzahl von Fotodioden bestimmt werden. So kann ein Wartungsaufwand der Vorrichtung vorteilhaft minimiert werden.

Beispielsweise kann der Antrieb ein Schneckengetriebe aufweisen. Das Schneckengetriebe kann ausgebildet sein, um die Reflexionsschranke zum Bestimmen der Geometrie des Behälters linear über eine Aufstellfläche des Behälters zu bewegen. Mit dieser nicht erfindungsgemäßen Ausführungsform kann der Antrieb zum Bewegen der Reflexionslichtschranke besonders kostengünstig realisiert werden.

In einer weiteren nicht erfindungsgemäßen Ausführungsform kann der Antrieb ausgebildet sein, um die Reflexionsschranke zum Bestimmen der Geometrie des Behälters in einem Bogen über eine Aufstellfläche des Behälters zu bewegen. Der Bogen kann insbesondere einen Winkel von mindestens 135 Grad beschreibt. Auf diese Weise können Größe und Form des Behälters besonders detailgenau ermittelt werden.

Gemäß einer weiteren nicht erfindungsgemäßen Ausführungsform kann die Vorrichtung ferner eine Einweglichtschranke mit einer Strahlquelle und einem gegenüber der Strahlquelle angeordneten oder anordenbaren Sensor aufweisen. Die Einweglichtschranke kann ausgebildet sein, um unter Verwendung eines von der Strahlquelle der Einweglichtschranke in Richtung des Sensors der Einweglichtschranke ausgesendeten Strahls eine Geometrie des Behälters zu bestimmen. Insbesondere kann dabei die Strahlquelle der Einweglichtschranke gegenüber der Reflexionslichtschranke und zusätzlich oder alternativ seitlich bezüglich der Reflexionslichtschranke an der Vorrichtung angeordnet oder anordenbar sein. Mit dieser nicht erfindungsgemäßen Ausführungsform können zusätzliche und/oder redundante Informationen bezüglich der Geometrie des Behälters gewonnen werden. Die Behältergeometrie kann so vorteilhafterweise noch detaillierter bestimmt werden, bzw., es können mit der Reflexionslichtschranke gewonnene Geometriedaten überprüft und verifiziert werden.

Beispielsweise kann die Strahlquelle der Einweglichtschranke zumindest eine LED mit einem Aluminiumgalliumarsenid-Halbleiter aufweisen. In dieser Ausführungsform kann die Einweglichtschranke besonders kostengünstig realisiert werden.

Eine Befülleinrichtung zum Befüllen eines Behälters mit einer Flüssigkeit und/oder einem Granulat, wobei die Befülleinrichtung eine Aufstellfläche zum Aufstellen des Behälters aufweist, ist dadurch gekennzeichnet, dass die Befülleinrichtung eine Vorrichtung gemäß einer der im Vorangegangenen erläuterten erfindungsgemäßen Ausführungsformen zur Bestimmung eines Inhalts des Behälters, wenn der Behälter auf der Aufstellfläche aufgestellt ist, aufweist, wobei die Vorrichtung an der Befülleinrichtung angeordnet oder anordenbar ist.

Bei der Befülleinrichtung kann es sich um ein beliebiges Gerät zum Einfüllen einer Flüssigkeit und/oder eines Granulats in einen Behälter handeln. So kann die Befülleinrichtung beispielsweise als ein Getränkeautomat wie ein Kaffeevollautomat ausgeführt sein. Es kann sich bei der Befülleinrichtung aber auch um ein in einem Labor eingesetztes Gerät zum exakten Dosieren von zu untersuchenden flüssigen oder granulatförmigen Substanzen handeln.

Ein nicht erfindungsgemäßes Verfahren zum Bestimmen eines Inhalts eines mit einer Flüssigkeit und/oder einem Granulat befüllbaren Behälters weist den folgenden Schritt auf:
Bestimmen eines Reflexes von einer Strahlquelle einer Reflexionslichtschranke in eine gegenüber der Reflexionslichtschranke positionierbare Öffnung eines Behälters ausgesendeten Strahls durch einen Sensor der Reflexionslichtschranke, um einen Füllstand einer Flüssigkeit und/oder eines Granulats in dem Behälter zu bestimmen.

Ein von einer Strahlquelle einer Reflexionslichtschranke in eine gegenüber der Reflexionslichtschranke positionierbare Öffnung eines Behälters ausgesendeter Strahl (Reflexionsstrahl) wird verwendet, um einen Füllstand einer Flüssigkeit und/oder eines Granulats in dem Behälter mittels eines Sensors der Reflexionslichtschranke zu bestimmen.

Die Erfindung wird nachstehend anhand der beigefügten Zeichnungen beispielhaft näher erläutert. Es zeigen:
Fig. 1 eine Prinzipdarstellung einer Befülleinrichtung zum Befüllen eines Behälters mit einer Flüssigkeit und/oder einem Granulat mit einer Vorrichtung zum Bestimmen eines Inhalts des Behälters unter Verwendung einer Reflexionslichtschranke, wobei die Vorrichtung eine ortsveränderliche und/oder mehrere fixierte Lichtschranken aufweisen kann (in der Fig. nicht dargestellt);
Fig. 2 eine perspektivische Darstellung einer Vorrichtung zum Bestimmen eines Inhalts eines Behälters unter Verwendung einer weiteren Reflexionslichtschranke,;
Fig. 3 eine Schnittdarstellung der Vorrichtung aus Fig. 2;
Fig. 4 eine Schnittdarstellung zur Verdeutlichung der Funktionsweise der Vorrichtung aus Fig. 2;
Fig. 5 eine Schnittdarstellung einer Vorrichtung zum Bestimmen eines Inhalts eines Behälters unter Verwendung einer Reflexionslichtschranke mit einem Antrieb,;
Fig. 6 eine perspektivische Darstellung der Vorrichtung aus Fig. 5;
Fig. 7 die erfindungsgemäße Darstellung einer Vorrichtung zum Bestimmen eines Inhalts eines Behälters unter Verwendung einer in x-, y-, und/oder z-Richtung drehbaren Reflexionslichtschranke mit einem Antrieb;
Fig. 8 eine Schnittdarstellung einer Befülleinrichtung mit einer Vorrichtung zum Bestimmen eines Inhalts eines Behälters unter Verwendung einer Reflexionslichtschranke und einer Einweglichtschranke,;
Fig. 9 eine Prinzipdarstellung einer Vorrichtung zum Bestimmen eines Inhalts eines Behälters unter Verwendung einer Kamera; und
Fig. 10 ein Ablaufdiagramm eines Verfahrens zum Bestimmen eines Inhalts eines Behälters.

In der nachfolgenden Beschreibung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

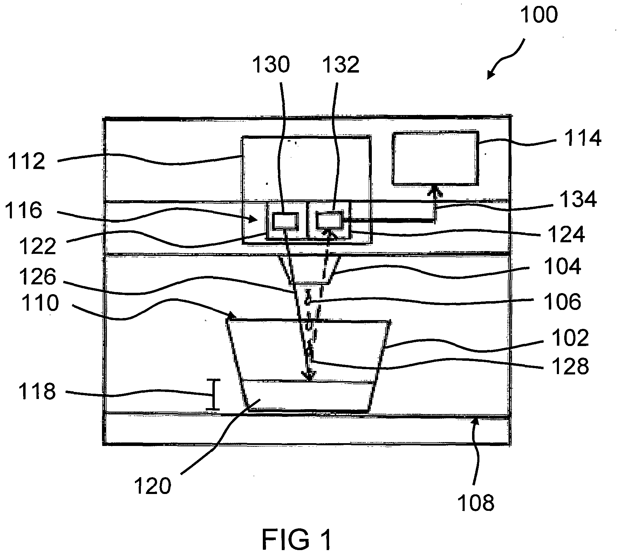

Fig. 1 zeigt eine Prinzipdarstellung einer Befülleinrichtung 100 zum Befüllen eines Behälters 102 mit einer Flüssigkeit und/oder einem Granulat. Bei der Befülleinrichtung 100 handelt es sich hier um einen Getränkeautomaten, beispielsweise einen Kaffeeautomaten. Es kann sich bei der Befülleinrichtung 100 alternativ auch um ein Laborgerät zum exakten Dosieren und Ausgeben einer zu untersuchenden flüssigen oder granulatartigen Substanz handeln. Die Befülleinrichtung 100 wird im Folgenden als ein Gerät zum Ausgeben von Flüssigkeiten behandelt.

Die Befülleinrichtung 100 ist ausgebildet, um mittels einer Flüssigkeitsausgabevorrichtung 104 eine Flüssigkeit 106 - hier Kaffee - in den Behälter 102 auszugeben. Bei dem Behälter 102 handelt es sich hier um eine Tasse, die so auf einer Aufstellfläche 108 der Befülleinrichtung 100 für den Behälter 102 aufgestellt ist, dass sich ihre Öffnung 110 unterhalb der Flüssigkeitsausgabevorrichtung 104 befindet.

Damit die Flüssigkeit 106 in korrekter Menge und Zusammensetzung in den Behälter 102 ausgegeben werden kann, weist die Befülleinrichtung 100 eine Vorrichtung 112 zum Bestimmen eines Inhalts des Behälters 102 und eine Füllvolumen-Bestimmungseinrichtung 114 auf, die ausgebildet ist, um unter Verwendung des Füllstands und einer Geometrie des Behälters 102 ein aktuell verfügbares Füllvolumen des Behälters 102 zu bestimmen. Bei dem in Fig. 1 gezeigten Prinzip der Befülleinrichtung 100 sind die Vorrichtung 112 und die Füllvolumen-Bestimmungseinrichtung 114 in einem Gehäuse der Befülleinrichtung 100 oberhalb der Aufstellfläche 108 angeordnet.

Die Vorrichtung 112 weist eine ortsveränderliche und/oder mehrere je nach vorhandener Maßgabe fixierte Reflexionslichtschranken 116 auf. Die Reflexionslichtschranke 116 ist ausgebildet, um einen Füllstand 118 einer Flüssigkeit 120 in dem Behälter 102 zu bestimmen und setzt sich aus einer Strahlquelle 122 und einem benachbart zu der Strahlquelle 122 angeordneten Sensor 124 zusammen. Dabei ist die Strahlquelle 122 ausgebildet, um in erfindungsgemäßen Ausführungen einen fokussierten oder defokussierten Strahl 126 in Richtung der Öffnung 110 des Behälters 102 und auf die Flüssigkeit 120 auszusenden. Der Sensor 124 ist ausgebildet, um eine Reflexion 128 des Strahls 126 zu bestimmen.

Bei der Flüssigkeit 120 kann es sich um dieselbe Flüssigkeit wie die Flüssigkeit 106 oder um eine andere handeln. Bei der in Fig. 1 vorgestellten Ausführung der Befülleinrichtung 100 als Kaffeemaschine bzw. Kaffeeautomat kann es sich bei der Flüssigkeit 120 beispielsweise um Milch handeln, die bereits in die Tasse 102 eingefüllt wurde. Anstelle der Flüssigkeit 120 kann bei einem anderen Ausführungsbeispiel auch ein Granulat 120 vorliegen.

Ob der Strahl 126 im Inneren der Tasse 102 reflektiert oder absorbiert wird bzw. ein Maß, in dem der Strahl 126 reflektiert oder absorbiert wird, hängt von der Art und/oder dem Füllstand 118 der Flüssigkeit 120 ab. Bei geeigneter Art der Strahlquelle 122 wird beispielsweise der Strahl 126 absorbiert, wenn es sich bei der Flüssigkeit 120 um z. B. Wasser oder Milch handelt. Ist der Füllstand 118 in dem Behälter 102 gleich null, dann ist keine Flüssigkeit in dem Behälter 102 vorhanden und der Strahl 126 wird vom Boden des Behälters 102 maximal reflektiert. Je nach Art der Flüssigkeit 120 kann der Strahl 126 beispielsweise auch mehr oder weniger stark absorbiert oder reflektiert werden. Entsprechend kann eine Stärke der Reflexion 128 variieren.

Bei dem in Fig. 1 gezeigten Prinzip weist die Strahlquelle 122 mindestens eine LED 130 auf. Beispielsweise ist die LED 130 mit einem Indiumgalliumarsenid-Halbleiter ausgestattet. In Fig. 1 ist die LED 130 ausgebildet, um Licht im Wellenlängenbereich um 1450 Nanometer auszusenden. Licht dieser Wellenlänge wird besonders gut von wässriger Flüssigkeit wie z. B. Milch absorbiert. Bei dem in Fig. 1 gezeigten Prinzip der Reflexionslichtschranke 116 weist der Sensor 124 zumindest eine Fotodiode 132 auf. Die Fotodiode 132 ist ausgebildet, um die Reflexion 128 des Strahls 126 zu bestimmen und ein auf dem Strahl 126 basierendes, den Füllstand 118 repräsentierendes, elektrisches Füllstandsignal 134 zu erzeugen und über eine geeignete Schnittstelle an die Füllvolumen-Bestimmungseinrichtung 114 auszugeben.

Die LED 130 kann erfindungsgemäß in speziellen Ausführungen auch mit Indiumgalliumnitrid-, Aluminiumindiumgalliumphosphid-, oder Aluminiumgalliumarsenid-Halbleitern ausgestattet sein.

Die Füllvolumen-Bestimmungseinrichtung 114 ist ausgebildet, um unter Verwendung des Füllstandsignals 134 und einer Geometrie des Behälters 102 ein aktuell verfügbares Füllvolumen des Behälters 102 zu bestimmen. Die Geometrie des Behälters 102 kann bei dem in Fig. 1 gezeigten Prinzip der Befülleinrichtung 100 in einem Datenspeicher der Befülleinrichtung 100 hinterlegt sein oder beispielsweise manuell durch einen Benutzer der Befülleinrichtung 100 eingegeben werden.

Die in Fig. 1 gezeigte beispielhafte Befülleinrichtung 100 ist ausgebildet, um in Abhängigkeit des aktuell verfügbaren Füllvolumens des Behälters 102 unabhängig von seiner Größe die Menge der auszugebenden Flüssigkeit 106 automatisch richtig zu dosieren und über die Flüssigkeitsausgabevorrichtung 104 in den Behälter 102 abzufüllen. Die Flüssigkeitsmenge 106 wird auch dann richtig dosiert, wenn sich beispielsweise bereits Flüssigkeit 120, wie z. B. Milch, in der Tasse 102 befindet, da das hier vorgeschlagene System eine Vorbefüllung des Behälters 102 bestimmen kann. Ein Überlaufen lässt sich somit verhindern.

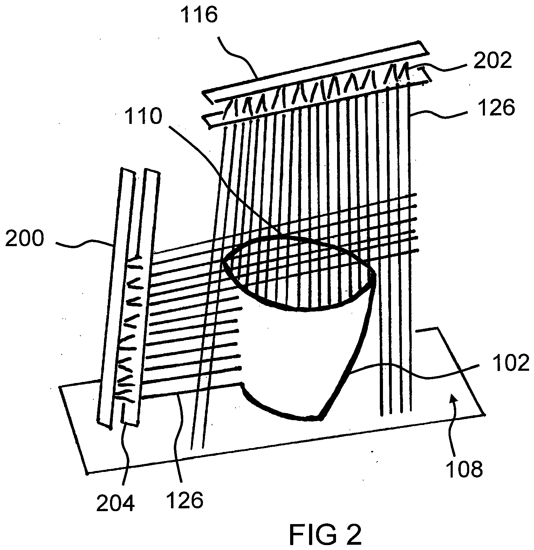

Fig. 2 zeigt anhand einer perspektivischen Darstellung eine nicht erfindungsgemäße Ausführungsvariante des hierin vorgeschlagenen Ansatzes der Befüllstandssteuerung für Getränkeautomaten und Getränkeabfüllverfahren. Es kommt hier neben der anhand der Darstellung in Fig. 1 vorgestellten Reflexionslichtschranke 116 eine weitere Reflexionslichtschranke 200 zum Einsatz.

Gezeigt ist wiederum der Behälter 102, der so auf der Aufstellfläche 108 positioniert ist, dass sich seine Öffnung 110 unterhalb der Reflexionslichtschranke 116 befindet. Die Reflexionslichtschranke 116 ist hier als ein Zeilensensor bzw. Array ausgebildet. Die Strahlquelle der Reflexionslichtschranke 116 wird durch eine Mehrzahl von in einer Reihe angeordneten oberflächenmontierten LEDs gebildet, und der Sensor der Reflexionslichtschranke 116 wird durch eine Mehrzahl von in einer weiteren Reihe angeordneten oberflächenmontierten Fotodioden gebildet. Die LEDs und Fotodioden bzw. PDs sind dabei alternierend in einem minimalen Raster von vier bis sechs Millimetern angeordnet. Ein von den LEDs und Fotodioden geringfügig beabstandetes Fokussierelement 202 sorgt dafür, dass die einzelnen, von den LEDs ausgesendeten Strahlen 126 fokussiert werden.

Die weitere Reflexionslichtschranke 200 ist so an der Befülleinrichtung angeordnet, dass sie sich seitlich des auf der Aufstellfläche 108 aufzustellenden Behälters 102 befindet. Wie die beispielhafte Reflexionslichtschranke 116 weist auch die beispielhafte weitere Reflexionslichtschranke 200 eine Mehrzahl von oberflächenmontierten LEDs und Fotodioden auf, die alternierend in einem minimalen Raster von vier bis sechs Millimetern angeordnet sind. Ein von den LEDs und Fotodioden der weiteren Reflexionslichtschranke 200 geringfügig beabstandetes weiteres Fokussierelement 204 sorgt dafür, dass auch die von den LEDs der weiteren Reflexionslichtschranke 200 ausgesendeten Strahlen 126 fokussiert werden.

Wie die Darstellung in Fig. 2 zeigt, weisen die Reflexionslichtschranken-Arrays 116, 200 jeweils eine Länge auf, die eine Breite bzw. Höhe des Behälters 102 überragt. Damit ist die Reflexionslichtschranke 116 geeignet, um unter Verwendung einer der Mehrzahl von LEDs entsprechenden Mehrzahl von Strahlen 126 neben dem Inhalt des Behälters 102 auch eine Geometrie oder zumindest einen Teil einer Geometrie des Behälters 102 zu bestimmen. Dazu werden bei dem in Fig. 2 gezeigten Prinzip die LEDs bzw. Sender und die Fotodioden bzw. Empfänger des Reflexlichtschranken-Arrays 116 paarweise nacheinander angesteuert bzw. abgefragt.

Unter "Geometrie" ist hier eine Größe, Form und/oder Wanddicke des Behälters 102 zu verstehen, die Rückschlüsse auf sein maximales bzw. aktuelles Füllvolumen erlauben. Mithilfe der seitlich des Behälters 102 angeordneten weiteren Reflexionslichtschranke 200 kann die Geometrie des Behälters 102 mithilfe der lateral auf einen Außenumriss des Behälters 102 auftreffenden Strahlen 126 noch exakter und detailgenauer bestimmt werden.

Mit den über eine geeignete Schnittstelle an die Füllvolumen-Bestimmungseinrichtung (in Fig. 2 nicht gezeigt) übergebenen Geometriedaten für den Behälter 102 kann diese ein aktuell verfügbares Füllvolumen für solche Behälter 102 bestimmen, deren Geometriedaten weder im System hinterlegt sind noch manuell eingegeben wurden.

Ein mit den in Fig. 2 gezeigten Reflexionslichtschranken-Arrays 116, 200 ausgestatteter beispielhafter Kaffeeautomat ist geeignet, vor der Zubereitung des Getränks die Größe des Gefäßes bzw. der Tasse 102 zu ermitteln und auf Grundlage dieser Daten die Menge des gemahlenen Kaffees oder eines sonstigen beizumengenden Getränkeinhaltsstoffs und die Flüssigkeitsmenge zu ermitteln und auszugeben. Damit kann individuell eine solche Menge an Kaffee bzw. Getränk ausgegeben werden, dass z. B. die Tasse 102 ausreichend gefüllt wird bzw. nicht überläuft.

Bei vielen Kaffee- oder Espressoautomaten sind fertige Mengen an Kaffeepulver und Wasser zur Aufbereitung des Getränks im Gerät programmiert. Benutzt beispielsweise ein Kunde eine Espressotasse und wählt versehentlich die Zubereitung eines Kaffees, kann es mit dem hier vorgestellten System nicht mehr zum Überlauf kommen, da der Automat erkennt, ob ein Gefäß 102 zur Aufnahme der Flüssigkeit abgestellt ist, das die Flüssigkeitsmenge aufnehmen kann. Ansonsten wird der Prozess abgebrochen, beispielsweise durch Bereitstellen eines Abbruchsignals durch das zentrale Steuergerät des Automaten.

Gemäß einem erfindungsgemäßen Ausführungsbeispiel bieten sich für die Strahlquellen der Reflexionslichtschranke 116 und/oder der weiteren Reflexionslichtschranke 200 preisgünstige LEDs mit Indiumgalliumarsenid-Halbleiter, kurz InGaAs-LEDs, mit einer Chipgröße von 0,4 Millimetern und für die Sensoren der Reflexionslichtschranke 116 und/oder der weiteren Reflexionslichtschranke 200 preisgünstige Fotodioden mit Indiumgalliumarsenid-Halbleiter, kurz InGaAs-PD-Chips, mit einer aktiven Fläche von 0,22 Millimetern an.

Auch ein alternativer Einsatz von noch preisgünstigeren InGaAs-PD-Chips bei 0,5 Millimetern aktiver Fläche ist sinnvoll.

Vorteilhaft kann auch der Einsatz von LEDs mit Aluminiumgalliumarsenid-Halbleiter, kurz AlGaAs-LEDs, als rote Punktstrahler-Chips sein.

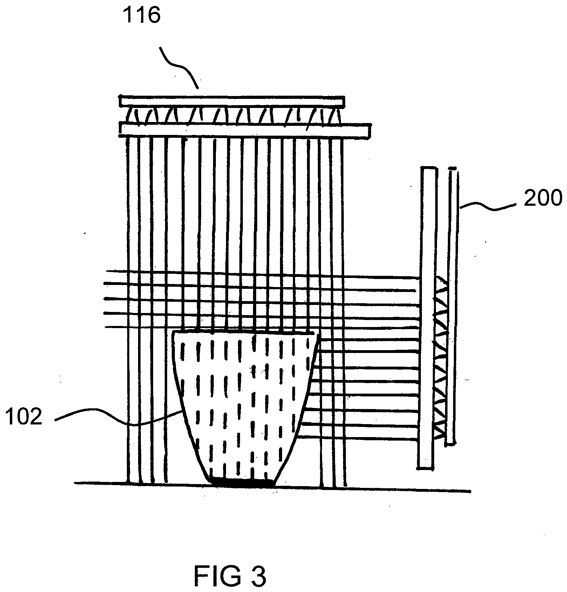

Fig. 3 zeigt eine Querschnittdarstellung der anhand der Fig. 2 erläuterten nicht erfindungsgemäßen Ausführung zur Befüllstandssteuerung und -messeinrichtung für Getränkeautomaten unter Verwendung der zwei Reflexionslichtschrankenarrays 116, 200.

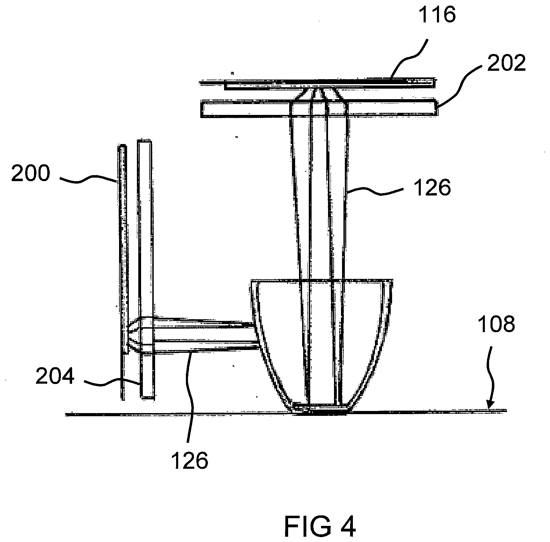

Fig. 4 zeigt anhand einer weiteren Querschnittsdarstellung zur besseren Verständlichkeit in einer Vergrößerung den Strahl 126 einer aktuell angesteuerten LED des Reflexionslichtschrankenarrays 116 und den Strahl 126 einer aktuell angesteuerten LED des weiteren Reflexionslichtschrankearrays 200. Hier ist gut zu erkennen, wie die Strahlen 126 beim Hindurchtreten durch das Fokussierelement 202 und das weitere Fokussierelement 204 fokussiert werden.

Gemäß einem in den Figuren nicht gezeigten Ausführungsbeispiel kann die Reflexionslichtschranke 116 und/oder die weitere Reflexionslichtschranke 200 auch mit defokussierten Strahlen 126 arbeiten. Hier kann unter Umständen ein vor der jeweiligen Strahlquelle anzubringendes Defokussierelement eingesetzt werden, mit dem ein hindurchtretender Strahl 126 gestreut werden kann. Die Streuung des Strahls 126 kann dabei die Ausmaße des unterhalb bzw. seitlich der Reflexionslichtschranken 116 und/oder 200 aufgestellten Behälters 102 überschreiten. Damit kann bei einem Einsatz von unter Umständen lediglich einer LED mit zugehörigem Sensor für die Reflexionslichtschranke 116 neben dem Inhalt auch - zumindest teilweise - eine Geometrie des Behälters 102 erfasst werden.

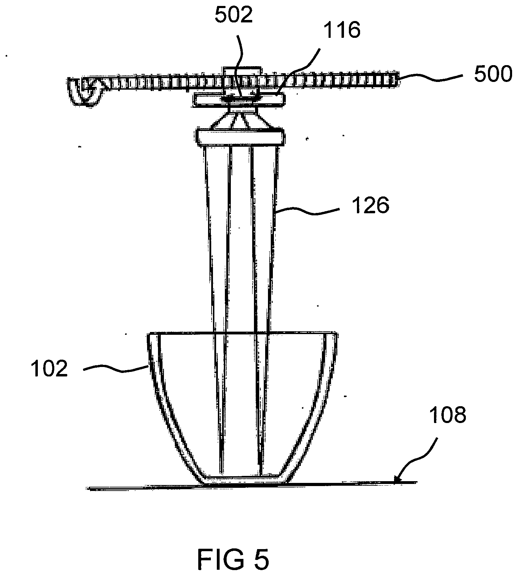

Fig. 5 zeigt in einer Schnittdarstellung eine weitere nicht erfindungsgemäße Ausführungsvariante des hierin vorgestellten Volumenmessmoduls unter Verwendung der Reflexionslichtschranke 116 als verfahrbares Element. Im gezeigten Ausführungsbeispiel weist die Vorrichtung zum Bestimmen eines Inhalts des Behälters 102 dazu einen Antrieb auf, von dem in der Darstellung ein Schneckengetriebe 500 gezeigt ist. Das Schneckengetriebe 500 ist in einer zu der Aufstellfläche 108 parallelen Ebene oberhalb der Aufstellfläche 108 angeordnet. Die Reflexionslichtschranke 116 ist so mit dem Schneckengetriebe 500 gekoppelt, dass sie in der parallelen Ebene in der Z-Achse 502 linear über der Aufstellfläche 108 verfahren werden kann.

Wie die Darstellung in Fig. 5 zeigt, überragt eine Länge des Schneckengetriebes 500 eine Breite des auf der Aufstellfläche 108 aufzustellenden Behälters 102, sodass mit der Bewegung der Reflexionslichtschranke 116 über die Aufstellfläche 108 unter Verwendung des von der Strahlquelle der Reflexionslichtschranke 116 ausgesendeten Strahls 126 neben einem Inhalt, z. B. eine Vorbefüllung, des Behälters 102 auch eine Geometrie oder zumindest ein Durchmesser des Behälters 102 erfasst werden kann.

Mit der in Fig. 5 gezeigten beispielhaften verfahrbaren Reflexionsschranke 116 kann sich der Einsatz eines Arrays mit einer Mehrzahl von Sendern und Empfängern erübrigen. In dieser Ausführung kann die Reflexionslichtschranke 116 mit nur je einer LED und Fotodiode oder einer geringen Anzahl von alternierend angeordneten LEDs und Fotodioden ausgestattet sein.

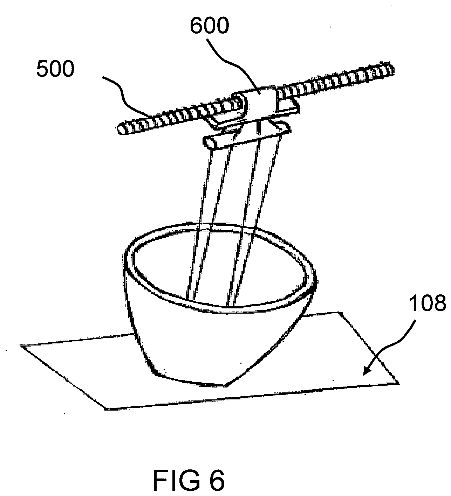

Fig. 6 zeigt die nicht erfindungsgemäße Ausführungsvariante der hierin vorgestellten Vorrichtung aus Fig. 5 mit dem Schneckengetriebe 500 in einer perspektivischen Ansicht. Die Reflexionslichtschranke 116 ist an einem Kopplungselement 600 des Antriebs befestigt. Mit dem Verfahren des Kopplungselements 600 entlang des Schneckengetriebes 500 wird die Reflexionslichtschranke 116 über die Aufstellfläche 108 bewegt.

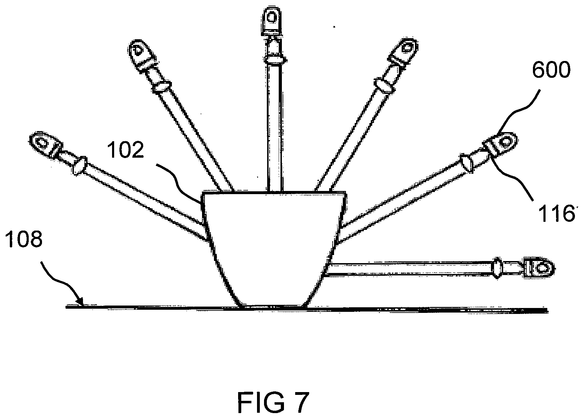

Fig. 7 zeigt in einer Prinzipdarstellung das erfindungsgemäße Ausführungsbeispiel für eine Reflexionslichtschranke 116 mit Antrieb. Hier ist der (nicht gezeigte) Antrieb ausgebildet, um die Reflexionsschranke 116 zum Bestimmen des Inhalts und der Geometrie des Behälters 102 in einem Bogen über die Aufstellfläche 108 des Behälters 102 zu verfahren.

Im Drehen der Reflexionsschranke 116 mit der Z-Achse in der X/Y-Ebene mittels des mit der Reflexionsschranke 116 verbundenen Kopplungselements 600 können ebenfalls Höhe, Durchmesser und Form der Tasse 102 bestimmt werden. Dabei wird die X/Y-Ebene zwischen zwei orthogonal zueinander und in der in Fig. 7 dargestellten Bildebene liegenden Geraden aufgespannt. Die Z-Achse bildet in der Darstellung in Fig. 7 eine Normale auf die Bildebene.

Bei dem in Fig. 7 gezeigten Ausführungsbeispiel wird die Reflexionslichtschranke 116 mittels des Kopplungselements 600 in einem Bogen von näherungsweise 135 Grad mittig um die Tasse 102 herum geschwenkt. In der Darstellung in Fig. 7 ist der Reflexionssensor 116 an verschiedenen aufeinanderfolgenden Stationen auf seinem Weg über die Aufstellfläche 108 gezeigt. So ist gut zu erkennen, wie im bogenförmigen Verfahren der Reflexionslichtschranke 116 um den Behälter 102 herum sowohl Inhalt als auch Geometrie des Behälters 102 sehr genau bestimmt werden können.

Zum Bestimmen von Inhalt und Geometrie der Tasse 102 setzt die Reflexionslichtschranke 116 bei dem in Fig. 7 gezeigten Ausführungsbeispiel einen Näherungssensor ein. Damit kann auch eine Nettohöhe des Behälters 102 ermittelt werden.

Gemäß einem weiteren Ausführungsbeispiel kann die Reflexionslichtschranke 116 auch als 3-Kammer-Reflexlichtschranke mit zusätzlichem sichtbaren (z. B. roten) Zielstrahl mit einer Wellenlänge von näherungsweise 1480 Nanometern ausgeführt sein.

In weiteren Ausführungen sind Wellenlängen des UV-Bereiches, des sichtbaren Bereiches, IR-Bereiches und erweitertem IR- Bereich sowohl für den Sender (LED) als auch für den Detektor (Photodiode) anwendbar. Abhängig von den Spektrallinien sind praktisch jede Flüssigkeit oder Granulat, auch aggressive Substanzen (Säuren, Laugen, radioaktives Wasser), erfassbar und damit die Erfindung nicht auf die Ausführungsbeispiele beschränkt.

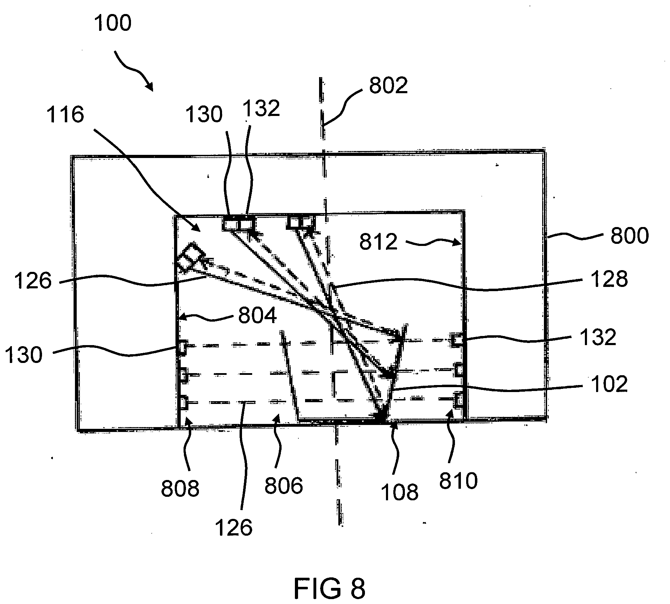

Fig. 8 zeigt in einer Schnittdarstellung ein weiteres nicht erfindungsgemäßes Ausführungsbeispiel der Befülleinrichtung 100 als Getränke- bzw. Kaffeeautomat. Gezeigt ist ein Gehäuse 800 der Befülleinrichtung 100, das sich in einer umgedrehten U-Form oberhalb der Aufstellfläche 108 erstreckt. Die beispielhafte Reflexionslichtschranke 116 umfasst hier drei Sender-Empfänger-Paare aus InGaAs-LEDs 130 mit entsprechenden Fotodioden 132.

Dabei sind zwei der Sender-Empfänger-Paare geeignet voneinander beabstandet der Aufstellfläche 108 gegenüberliegend und seitlich einer Mittelachse 802 der Befülleinrichtung 100 an dem Gehäuse 800 angeordnet. Das dritte Sender-Empfänger-Paar ist seitlich zur Aufstellfläche 108 an einem oberen inneren Abschnitt einer Seiteninnenwand 804 des Gehäuses 800 angeordnet. Die Sender 130 sind dabei so ausgerichtet, dass jeder der drei Strahlen 126 in einem anderen Winkel von schräg oben auf bzw. in den Behälter 102 auftrifft. Mittels der jeweils parallel zu den Strahlen 126 auf die Empfänger 132 zurückgeworfenen Reflexionen 128 kann so insbesondere eine Füllstandshöhe in dem Behälter 102 genau detektiert werden.

Zur Bestimmung oder genaueren Bestimmung einer Geometrie des Behälters 102 weist die in Fig. 8 gezeigte beispielhafte Befülleinrichtung 100 zusätzlich eine Einweglichtschranke 806 auf. Die Einweglichtschranke 806 ist hier als ein Zeilensensor mit drei Sender-Empfänger-Paaren ausgeführt. Dabei sind zur Bildung einer Strahlquelle 808 der Einweglichtschranke 806 drei LEDs 130 geeignet beabstandet übereinander an einem unteren inneren Abschnitt der Seiteninnenwand 804 des Gehäuses 800 angeordnet. Zur Bildung eines Sensors 810 der Einweglichtschranke 806 sind gegenüberliegend zu den drei LEDs 130 drei Fotodioden 132 zur Detektion der von der Strahlquelle 808 ausgesendeten Strahlen 126 an einer der Seiteninnenwand 804 gegenüberliegenden weiteren Seiteninnenwand 812 des Gehäuses 800 angeordnet. Bei der Einweglichtschranke 806 wird das Signal durch Unterbrechung der Lichtverbindung zwischen Sender 130 und Empfänger 132 erzeugt.

Gemäß einem Ausführungsbeispiel werden in der Einweglichtschranke 806 für die Strahlquelle 808 LEDs 130 mit einem Aluminiumgalliumarsenid-Halbleiter eingesetzt.

In einem in den Figuren nicht gezeigten weiteren nicht erfindungsgemäßen Ausführungsbeispiel kann zur Durchmesserbestimmung des Behälters 102 eine alternative Einweglichtschranke mit einer Lichtverbindung entlang der Mittelachse 802 eingesetzt werden. Als Lichtquelle kann hier eine leuchtende Platte oder ein leuchtender Ring in die Aufstellfläche 108 eingelassen sein, auf die bzw. den der Behälter 102 mittig aufgesetzt werden kann. Auf der Empfängerseite kann gegenüber der Aufstellfläche 108 für den Behälter 102 ein Fotodiodenarray angeordnet sein.

Bei der in Fig. 8 gezeigten beispielhaften Befülleinrichtung 100 wird die Füllstandshöhe mit der Reflexionslichtschranke 116 ermittelt und kontrolliert und ein Volumen der Tasse 102 zumindest teilweise basierend auf Durchmesserdaten des Behälters 102 ermittelt, die durch die Einweglichtschranke 806 bereitgestellt werden. Diese ist im gezeigten Ausführungsbeispiel durch das horizontale LED-Array 130 mit gegenüberliegenden Empfängern 132 gebildet.

Für das horizontale Lichtschrankenarray 806 können preiswerte AlGaAs-LEDs mit Strahlfokussierungsoptik und Si-Fotodioden verwendet werden. Zur Erfassung der Füllstandshöhe können InGaAs-LEDs 130 und PDs 132 eingesetzt werden. Im Spektralbereich um 1450 Nanometer besteht eine sehr gute Absorption der Strahlung durch Wasser. Es können entweder mehrere fokussierte Strahlen 126 eingesetzt werden, die von der Tasseninnenseite bei Erreichen des Reflexionspunktes übergangslos nicht mehr detektiert werden, oder es kann mit einem defokussierten Strahl 126 gearbeitet werden, wobei das detektierte Signal kontinuierlich bis zum Erreichen der Füllstandshöhe abnimmt. Letztere Variante kann unter Umständen ein robusteres Signal liefern.

Gemäß einem Ausführungsbeispiel können IR-Reflexkoppler 132 eingesetzt werden, die es ermöglichen, die Grenze von beispielsweise Kaffee zu Tasse 102 auch bei Vorhandensein von Schaum eindeutig zu erkennen. Dazu bietet sich die Verwendung eines Strahls 126 an, der Eigenschaften aufweist, durch die Störungen durch Fremdlichteinflüsse vernachlässigbar sind.

Beispielhaft wird die optische Sensorik 116, 806 mit einer Auswerte- und Steuerungssoftware gekoppelt. Alternativ bzw. gekoppelt können auch Sensoreinheiten Verwendung finden, die sich im Bodenbereich der Tassenabstellfläche 108 befinden. Diese können den Durchmesser bzw. die Form des Behältnisses 102 ermitteln.

Beispielhaft und in Kombination mit einer Auswerteeinheit kann das System 100 mit einer Kundenkarte kombiniert werden, die die abgefüllten Mengen erfasst und dem jeweiligen Nutzer oder Nutzerkreis zuordnen kann. Sinnvoll wäre ein solches Konzept z. B. in Betriebseinrichtungen oder für Stammkunden, usw. Als Einsatzorte bieten sich Betriebe, Kantinen oder sonstigen Einrichtungen mit viel Personenverkehr an.

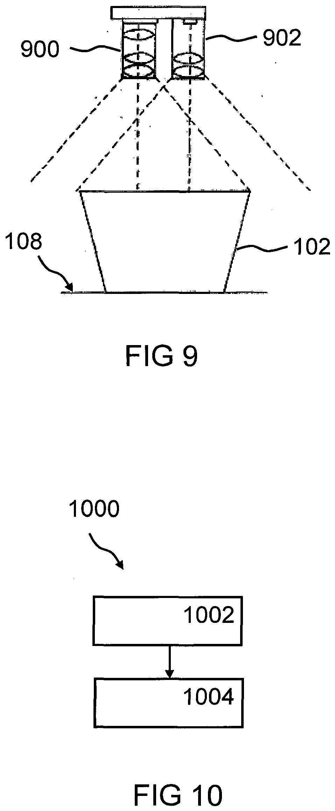

Fig. 9 zeigt eine Prinzipdarstellung einer Variante der Vorrichtung zum Bestimmen eines Inhalts eines Behälters mit einer Kamera. Zur Bestimmung eines Inhalts und einer Geometrie des Behälters 102 sind oberhalb der Aufstellfläche 108 mit dem Behälter 102 benachbart zueinander ein Mikroweitwinkelobjektiv 900 einer Kamera und eine Leuchtquelle 902 montiert.

Fig. 10 zeigt ein Ablaufdiagramm eines nicht erfindungsgemäßen Verfahrens 1000 zum Bestimmen eines Inhalts eines Behälters. Das Verfahren kann beispielsweise in einer Befülleinrichtung wie in den Figuren 1 und 8 gezeigt ausgeführt werden. In einem Schritt des Bestimmens 1002 wird ein von einer Strahlquelle einer Reflexionslichtschranke in eine gegenüber der Reflexionslichtschranke positionierbare Öffnung eines Behälters ausgesendeter Strahl durch einen Sensor der Reflexionslichtschranke erfasst. In einem Schritt des Bestimmens 1004 wird unter Verwendung eines den erfassten Strahl repräsentierenden Signals ein Füllstand einer Flüssigkeit und/oder eines Granulats in dem Behälter bestimmt.

Das hierin vorgestellte erfinderische Prinzip kann auch zur Erfassung und Steuerung von Dosiereinheiten, Laboreinrichtungen, Analysegeräten oder geeigneten Auswerteeinheiten usw. geeignet sein, bei denen portionierte Flüssigkeits- oder Granulatmengen ermittelt und ausgegeben werden müssen und unterschiedliche Behältergrößen auftreten können. Dies kann nur beispielsweise und nicht erschöpfend in der Medizin, in der Pharmaindustrie, in der Lebensmittelbranche usw. sein. Um die Genauigkeit z. B. von Mischungsverhältnissen zu gewinnen, um damit gegebenenfalls ein Umfüllen aus anderen Behältern einzusparen, kann das erfinderische Prinzip ebenfalls zum Einsatz kommen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Vorrichtung (112) ausgeführt zur Bestimmung eines Füllvolumens eines mit einer Flüssigkeit und/oder einem Granulat (106) befüllbaren Behälters (102) sowie zur Verwendung des bestimmten Füllvolumens zur Bestimmung einer Menge eines der Flüssigkeit und/oder Granulat (106) beizumengenden Inhaltsstoffs, wobei die Vorrichtung (112) das folgende Merkmal aufweist:
eine Reflexionslichtschranke (116) mit einer Strahlquelle (122) und einem Sensor (124) ist ausgebildet, um unter Verwendung eines von der Strahlquelle (122) in eine unterhalb der Reflexionslichtschranke (116) positionierbare Öffnung (110) des Behälters (102) ausgesendeten Strahls (126) sowohl eine Funktion der Ermittlung eines Füllstands (118) als auch eine Funktion der Ermittlung einer Geometrie des Behälters auszuführen, wobei die Reflexionslichtschranke in x-, y- und/oder z-Richtung um einen Ursprung gedreht werden kann.

2. Vorrichtung (112) gemäß Anspruch 1, bei der die Strahlquelle (122) zumindest eine LED (130) aufweist und der Sensor (124) zumindest eine Fotodiode (132) aufweist, wobei die Fotodiode (132) ausgebildet ist, um den Strahl (126) zu erfassen und ein auf dem Strahl (126) basierendes, den Füllstand (118) repräsentierendes, elektrisches Füllstandsignal (134) zu erzeugen.

3. Vorrichtung (112) gemäß Anspruch 2, bei der die LED (130) einen Indiumgalliumarsenid-, Indiumgalliumnitrid-, Aluminiumindiumgalliumphosphid-, oder Aluminiumgalliumarsenid-Halbleiter aufweist.

4. Vorrichtung (112) gemäß einem der vorangegangenen Ansprüche, bei der die Strahlquelle (122) ausgebildet ist, um den Strahl (126) als einen defokussierten Strahl auszusenden.

5. Vorrichtung (112) gemäß einem der Ansprüche 1 bis 3, bei der die Strahlquelle (122) ausgebildet ist, um den Strahl (126) als einen fokussierten Strahl auszusenden.

6. Befülleinrichtung (100) zum Befüllen eines Behälters (102) mit einer Flüssigkeit und/oder einem Granulat (106), wobei die Befülleinrichtung (100) eine Aufstellfläche (108) zum Aufstellen des Behälters (102) aufweist, **dadurch gekennzeichnet, dass** die Befülleinrichtung (100) eine Vorrichtung (112) gemäß einem der vorangegangenen Ansprüche zur Bestimmung eines Inhalts des Behälters (102), wenn der Behälter (102) auf der Aufstellfläche (108) aufgestellt ist, aufweist, wobei die Vorrichtung (112) an der Befülleinrichtung (100) angeordnet oder anordenbar ist.

7. Verwendung einer Vorrichtung nach einem der Ansprüche 1 - 6 zur Bestimmung einer Menge eines einer Flüssigkeit und/oder Granulat (106) beizumengenden Inhaltsstoffs.

## Claims

1. Apparatus (112) designed for determining a filling volume of a container (102), which is fillable with a liquid and/or a granulate (106), and for using the determined filling volume to determine an amount of an ingredient that is to be added to the liquid and/or the granulate (106), wherein the apparatus (112) has the following feature:
a reflection light barrier (116) having a beam source (122) and a sensor (124) is configured to perform both a function of ascertaining a filling level (118) and a function of ascertaining a geometry of the container by using a beam (126) emitted by the beam source (122) into an opening (110) of the container (102), said opening being positionable below the reflection light barrier (116), wherein the reflection light barrier can be rotated about an origin in the x-, y- and/or z-direction.

2. Apparatus (112) according to Claim 1, in which the beam source (122) has at least one LED (130) and the sensor (124) has at least one photodiode (132), wherein the photodiode (132) is configured to capture the beam (126) and to generate an electrical filling level signal (134) that is based on the beam (126) and represents the filling level (118).

3. Apparatus (112) according to Claim 2, in which the LED (130) has an indium gallium arsenide semiconductor, indium gallium nitride semiconductor, aluminium indium gallium phosphide semiconductor or aluminium gallium arsenide semiconductor.

4. Apparatus (112) according to one of the preceding claims, which the beam source (122) is configured to emit the beam (126) as a defocused beam.

5. Apparatus (112) according to one of Claims 1 to 3, in which the beam source (122) is configured to emit the beam (126) as a focused beam.

6. Filling device (100) for filling a container (102) with a liquid and/or a granulate (106), wherein the filling device (100) has a support surface (108) for placement of the container (102), **characterized in that** the filling device (100) has an apparatus (112) according to one of the preceding claims for determining a content of the container (102) when the container (102) has been placed on the support surface (108), wherein the apparatus (112) is arranged or arrangeable on the filling device (100).

7. Use of an apparatus according to one of Claims 1-6 for determining an amount of an ingredient that is to be added to a liquid and/or granulate (106).

## Revendications

1. Dispositif (112), conçu pour déterminer un volume de remplissage d'un récipient (102) pouvant être rempli d'un liquide et/ou d'un granulat (106) ainsi que pour utiliser le volume de remplissage déterminé pour déterminer une quantité d'un ingrédient à ajouter au liquide et/ou au granulat (106), le dispositif (112) possédant la caractéristique suivante :
une barrière photoélectrique à réflexion (116) comprenant une source de rayonnement (122) et un capteur (124) est configurée pour, en utilisant un rayon (126) émis par la source de rayonnement (122) dans une ouverture (110) du récipient (102) pouvant être positionnée au-dessous de la barrière photoélectrique à réflexion (116), accomplir à la fois une fonction d'identification d'un niveau de remplissage (118) ainsi qu'une fonction d'identification d'une géométrie du récipient, la barrière photoélectrique à réflexion pouvant être tournée dans la direction x, y et/ou z autour d'une origine.

2. Dispositif (112) selon la revendication 1, avec lequel la source de rayonnement (122) possède au moins une LED (130) et le capteur (124) possède au moins une photodiode (132), la photodiode (132) étant configurée pour détecter le rayon (126) et générer un signal de niveau de remplissage (134) électrique basé sur le rayon (126) et représentant le niveau de remplissage (118).

3. Dispositif (112) selon la revendication 2, avec lequel la LED (130) possède un semiconducteur à base d'arséniure de gallium et d'indium, de nitrure de gallium et d'indium, de phosphure de gallium d'indium et d'aluminium ou d'arséniure de gallium et d'aluminium.

4. Dispositif (112) selon l'une des revendications précédentes, avec lequel la source de rayonnement (122) est configurée pour émettre le rayon (126) sous la forme d'un rayon défocalisé.

5. Dispositif (112) selon l'une des revendications 1 à 3, avec lequel la source de rayonnement (122) est configurée pour émettre le rayon (126) sous la forme d'un rayon focalisé.

6. Dispositif de remplissage (100) destiné à remplir un récipient (102) avec un liquide et/ou un granulat (106), le dispositif de remplissage (100) possédant une surface de placement (108) destinée à y placer le récipient (102), **caractérisé en ce que** le dispositif de remplissage (100) possède un dispositif (112) selon l'une des revendications précédentes pour déterminer un contenu du récipient (102) lorsque le récipient (102) est placé sur la surface de placement (108), le dispositif (112) étant disposé ou pouvant être disposé au niveau du dispositif de remplissage (100).

7. Utilisation d'un dispositif selon l'une des revendications 1 à 6 pour déterminer une quantité d'un ingrédient à ajouter à un liquide et/ou un granulat (106) .
